Europäisches Patentamt

(19) European Patent Office

Office européen des brevets

(11) Publication number: **0 079 217**
**A2**

## (12) EUROPEAN PATENT APPLICATION

(21) Application number: 82305903.5

(22) Date of filing: 05.11.82

(51) Int. Cl.³: **F 02 B 29/04**

(30) Priority: 06.11.81 US 318937

(43) Date of publication of application:
18.05.83 Bulletin 83/20

(84) Designated Contracting States:
DE FR GB IT NL SE

(71) Applicant: THE GARRETT CORPORATION
9851-9951 Sepulveda Boulevard P.O. Box 92248
Los Angeles, California 90009(US)

(72) Inventor: Manfredo, Joseph H.
505, Via Gorrion
Palos Verdes Estates California(US)

(72) Inventor: Hirsch, Selwyn Roy
4060, Avenida Sevilla Cypress
Los Angeles California(US)

(74) Representative: Arthur, George Fitzgerald et al,
KILBURN & STRODE 30, John Street
London WC1N 2DD(GB)

(54) A charge air cooler.

(57) A charge air cooler (10) is provided for mounting within the intake manifold (12) of an internal combustion engine. The charge air cooler (10) comprises a heat exchanger core formed by a plurality of lightweight heat transfer elements (34,36,38) defining a first flow path (42) for charge air prior to induction of the charge air into the engine, and a second flow path (44) for a coolant in heat transfer relation with the charge air. The heat exchanger core (10) supports at least one transversely extending rigid mounting sleeve (66;166) for receiving a mounting bolt (14;114,115) passed through a bolt-receiving hole (74,76) in the intake manifold (12) to secure the charge air cooler (10) within the intake manifold (12).

EP 0 079 217 A2

- 1 -

# A Charge Air Cooler

This invention relates generally to a heat exchanger and particularly to a heat exchanger of a type commonly referred to as a charge air cooler. Such heat exchangers are used in reducing the temperature of charge air supplied to an internal combustion engine. The term "charge air" will be understood herein to refer to the air supplied for mixing with fuel in an internal combustion engine. This charge air comprises ambient air which has often been compressed by apparatus such as a supercharger or turbocharger to provide an increased mass flow of air to the engine to permit the engine to burn an increased quantity of fuel and thereby operate at an increased level of power and performance. However, compression of the ambient air also elevates the air temperature such that the charge air has a relatively high temperature which, if not reduced, undesirably increases the total engine heat load. It is therefore desirable to cool the charge air prior to supply thereof to the engine. Charge air coolers in general are known in the art; these usually comprise a heat exchanger core mounted along the flow path of charge air supplied to an internal combustion engine. They typically include a plurality of lightweight heat transfer elements defining flow paths to pass the charge air in heat transfer relation with a suitable coolant, such as ambient air or a liquid coolant, prior to induction of the charge air into the engine.

- 2 -

Specifically, this invention relates to an improved charge air cooler having a simplified arrangement for mounting the charge air cooler securely into an induction manifold of an internal combustion engine.

In many engine systems, it is both convenient and desirable to mount the charge air cooler directly into an induction manifold of the engine. In this configuration, the charge air passing through the induction manifold simultaneously passes through an air flow path in the charge air cooler immediately prior to induction into the engine. Suitable means are provided for circulating a coolant through a separate flow path in the charge air cooler whereby to reduce the temperature of the charge air. For example, it is known to circulate liquid coolant from an engine-cooling radiator through the charge air cooler to reduce the temperature of the charge air.

In one known charge air cooler construction the charge air cooler is mounted within the intake manifold of the engine by a plurality of bolts which extend through opposite sides of the manifold and are fastened into appropriate threaded structures carried on the opposite sides of the charge air cooler. However, this mounting technique requires the charge air cooler to include relatively thick and structurally rigid side plates capable of supporting the bolt-receiving threaded structures and of accommodating the stresses applied to the cooler by the mounting bolts. These thick side plates increase the overall weight and cost of the cooler and have an effective thermal expansion somewhat different from that of the relatively thin and lightweight heat transfer elements defining the fluid flow paths. As a result, the charge air cooler is subjected to relatively high mechanical and thermal stresses during use, which stresses tend to reduce the overall operating life of the cooler. In addition, the relatively thick side plates occupy a significant portion of the charge air cooler volume which could otherwise be occupied by heat transfer elements to improve heat transfer capability.

In most internal combustion engines, the induction manifold is mounted closely alongside the engine thereby making access to the charge air cooler mounting bolts extremely difficult at one side of the induction manifold. For example, the induction manifold typically includes an outboard wall facing away from the engine at which the mounting bolts fastened therethrough are accessible, and an inboard wall facing toward the engine at which mounting bolts fastened therethrough are substantially inaccessible once the intake manifold is mounted on the engine. Because the charge air cooler is not easily mounted within the intake manifold when the intake manifold is mounted on the engine it is usual for the charge air cooler to be first bolted into the intake manifold and then the cooler and manifold assembly is bolted as a unit on to the engine. Unfortunately, the combined size and weight of the cooler and manifold assembly makes this procedure rather difficult and time consuming, and this results in a substantial increase in manufacturing costs.

The present invention overcomes the problems and disadvantages of the prior art by providing an improved charge air cooler having a mounting arrangement which allows the charge air cooler to be quickly and easily installed into an induction manifold after this latter has been already mounted on an engine. The cooler of the invention includes structural members for receiving mounting bolts and avoids the need for thick and structurally rigid side plates to resist mechanical and/or thermal loading of heat transfer elements.

According to one aspect of the present invention there is provided a charge air cooler for mounting within an engine induction manifold, comprising a heat exchanger core having formed therein a first flow path and a second flow path for passage, in heat transfer relation with one another, of charge air and a coolant respectively, and at least one substantially rigid mounting sleeve carried by the said heat exchanger core and extending therethrough, the length of the mounting sleeve being at least as great as that dimension of the said heat exchanger core parallel to the length of the sleeve.

In a preferred embodiment of the invention, the heat exchanger core is a so-called plate-and-fin heat exchanger having a heat exchanger core with a plurality of heat transfer elements in a stacked array. The second set of fin elements define, with the divider plates,

0079217

- 5 -

the second flow path for passage of the coolant,
generally at a right angle to the first flow path.
Header bars are interposed between the divider plates
at the longitudinal margins of the second plate-fin
elements to isolate the flow paths from each other,
and header tanks are provided at the opposite ends
of the second plate-fin elements for respectively
guiding the coolant for flow into and f ow from the
second flow path.

The components of the heat exchanger core are
secured together such as by brazing to form an integral
structural unit.  This structural unit has a size and
shape for relatively close reception into an engine
induction manifold with the fin elements and the
divider plates oriented generally in parallel with
opposite walls of the manifold.

At least one structurally rigid mounting sleeve
extends through the core transversely between the
opposite walls of the manifold.  This sleeve is secured
to each one of the divider plates such as by brazing
to prevent leakage of fluid between the flow paths
in the vicinity of the mounting sleeve.

The sleeve may be secured to a plurality of
annular sealing rings carried about the sleeve and
projecting radially outwardly therefrom between the
divider plates for connection to the divider plates.
Importantly, the mounting sleeve has a length to project slightly beyond the opposite exterior surfaces of the core.

The heat exchanger core is securely mounted within the intake manifold by a mounting bolt passed through a bolt-receiving hole in the manifold into the mounting sleeve. This mounting bolt may pass through a bolt-receiving hole in one wall of the manifold and further through the mounting sleeve for threaded reception into an aligned and threaded bolt-receiving hole in the opposite wall of the manifold. In this arrangement, the threaded hole is formed in the manifold wall at an inboard side of the manifold closely adjacent the engine such that access to the inboard side wall is not required to mount the cooler within the intake manifold. The mounting bolt secures the charge air cooler with the manifold walls engaging the opposite ends of the mounting sleeve, whereby mechanical mounting forces are applied directly to the rigid mounting sleeve substantially without loading of the fin elements or the divider plates.

In an alternative embodiment, the mounting sleeve is internally threaded, and a pair of mounting bolts are fastened into the sleeve through aligned bolt-receiving holes formed in the opposite walls of the manifold.

The invention can be put into practice in many different ways, but two embodiments of the present invention will now be more particularly described by way of example with reference to the accompanying drawings, in which:

FIGURE 1 is an exploded perspective view of a first embodiment of the invention illustrating how a charge air cooler is mounted in the induction manifold of an internal combustion engine;

FIGURE 2 is a fragmented top plan view, on a larger scale than Figure 1, of the charge air cooler installed within the induction manifold, with portions broken away to illustrate the mounting arrangement;

FIGURE 3 is a fragmented side view on a larger scale than Figure 1, of the charge air cooler, with portions broken away to illustrate the fluid flow paths therethrough;

FIGURE 4 is a vertical section on a larger scale taken generally on the line 4-4 of Figure 2; and

FIGURE 5 is a fragmented horizontal section of a portion of a charge air cooler formed as a second embodiment of the present invention having a different arrangement for mounting the cooler within the induction manifold of an internal combustion engine.

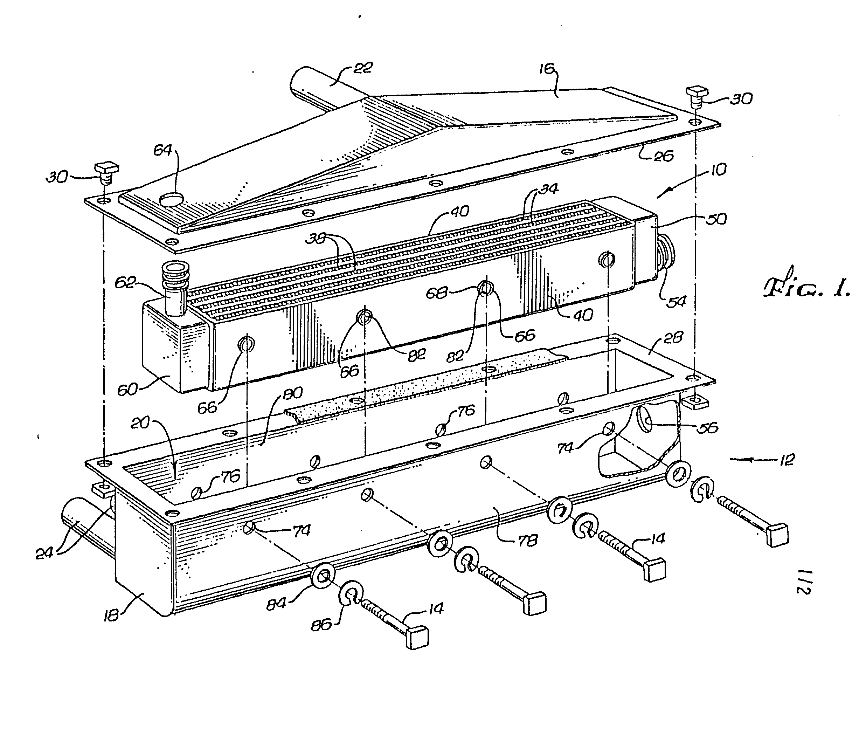

Referring now to the drawings, and particularly to Figure 1 there is shown a charge air cooler 10 in the form of a heat exchanger adapted to fit within an induction manifold 12 of an internal combustion engine. The charge air cooler 10 is held within the induction manifold 12 by means of a plurality of mounting bolts 14 in such a way that the heat transfer elements of the charge air cooler 10 are not subjected to substantial mechanical mounting forces.

The charge air cooler 10 and the induction manifold 12 are intended for use with an internal combustion engine (not shown) which is supplied with compressed ambient air from a supercharger, turbocharger, or the like (also not shown). The induction manifold 12 forms a portion of the flow path through which the compressed air, commonly referred to as charge air, passes on its way to the engine combustion chamber or chambers and the charge air cooler is provided for reducing the temperature of the charge air prior to induction into the engine. This reduction in temperature of the charge air advantageously increases the charge air density and decreases the overall heat load on the engine for the purpose of increasing overall engine performance and economy.

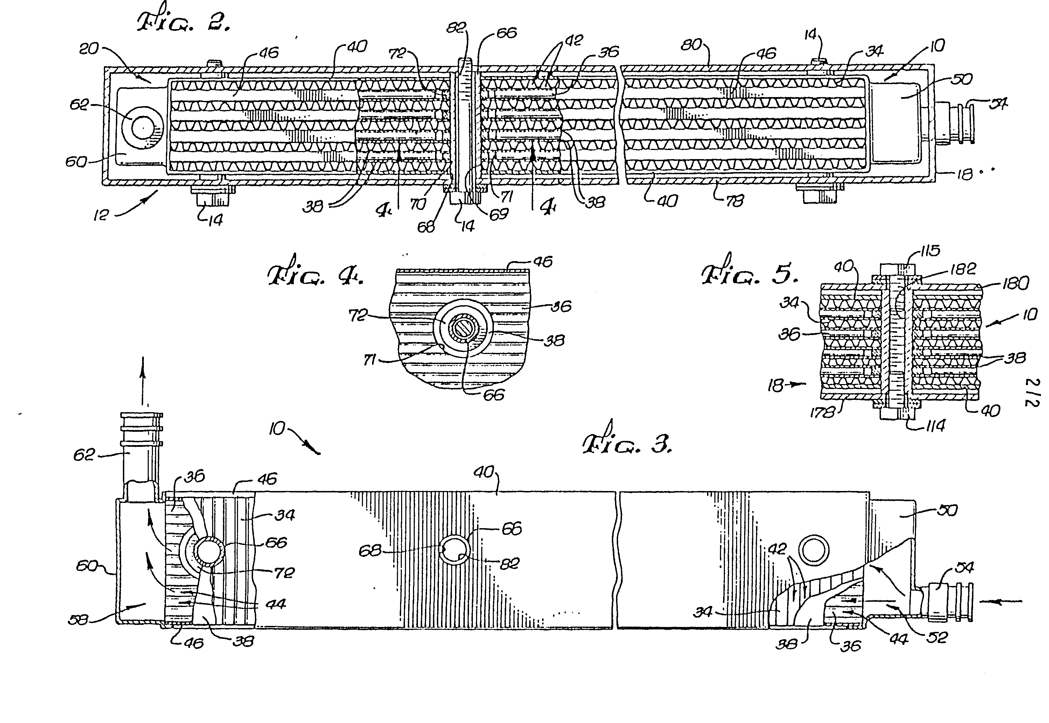

A typical induction manifold 12 with which the charge air cooler of this invention can be used is illustrated in detail in Figures 1 and 2. As shown, in the drawings the manifold 12 comprises an upper, manifold cover section 16 and a lower, manifold body section 18 which cooperate to define a manifold chamber 20 in which the charge air cooler 10 is mounted. The upper manifold section 16 is connected to a charge air supply conduit 22 through which in use charge air arrives from a turbocharger or the like to flow downwardly into the manifold chamber 20 and pass through the charge air cooler 10 prior to discharge to the engine combustion chamber or chambers through a plurality of individual outlet conduits 24. Conveniently the upper and lower manifold sections 16 and 18 respectively include mating flanges 26 and 28 through which a plurality of connecting bolts 30 are fastened to connect the manifold sections securely together. If desired, a sealing gasket 32 can be interposed between the flanges 26 and 28 to prevent fluid leakage.

The charge air cooler 10 comprises a heat exchanger structure the size and shape of which is such as to fit closely into the lower manifold section 18 of the intake manifold 12 so that the charge air passing downwardly through the manifold is substantially prevented from bypassing the charge air cooler but is constrained to flow through an air flow path within the charge air cooler in heat exchange relation with a coolant which is circulated through a coolant fluid flow path within the charge air cooler.

The charge air cooler shown in the drawings is a so-called plate-and-fin heat exchanger having a heat exchanger core comprising a stacked array of lightweight plates constituting the heat transfer elements with a plurality of lightweight divider fins extending between them. More specifically, the cooler heat exchanger core has a plurality of first fin elements 34 each formed from a lightweight material having relatively high heat conductive properties, such as thin copper sheet shaped to have a generally corrugated cross section defining an extended heat transfer surface area. A plurality of second fin elements 36 are also formed from a lightweight material having high heat conductive properties, such as thin copper sheet shaped to have a generally corrugated cross section also defining extended surface heat transfer areas.

As can best be seen in Figures 1 to 3, the plate fin elements 34 are oriented with their corrugations extending orthogonally with respect to those of the fin elements 36, and stacked alternately therewith, the fin elements 32 and 36 being separated from each other in the stack by a plurality of thin, lightweight divider plates 38 of a heat conductive material such as copper. The entire stack, comprising the fin elements 34 and 36 and the divider plates 38 is sandwiched between a pair of protective side plates 40 which are also formed from a heat conductive material, such as copper, and which advantageously may have a lightweight and thin construction generally corresponding to that of the divider plates 38.

In the orientation illustrated in Figure 1 the fin elements 34 are arranged with their corrugations extending generally vertically so that these elements 34 cooperate with the divider plates 38 and the side plates 40 to define a plurality of vertically extending, relatively small passages 42. The flow openings 42 together constitute a first flow path, for the charge air through the heat exchanger core when the charge air cooler 10 is mounted within the induction manifold 12.

The second set of fin elements 36 are arranged with their corrugatio s extending horizontally, generally in a longitudinal direction from one end of the heat exchanger core to the other and generally orthogonally of the passages 42 défining the charge air flow path. The fin elements 36 of the second set cooperate with the divider plates 38 to define a plurality of longitudinally extending and relatively small passageways 44 which provide a second flow path through the manifold for the passage of the coolant in heat exchange relation with the charge air. Importantly, to prevent fluid leakage between the two flow paths, the upper and lower longitudinal margins of the fin elements 36 of the second set are bounded by longitudinally extending header bars 46 positioned between adjacent divider plates 38.

Coolant is supplied to one end of the charge air cooler 10 for flow through the longitudinal passageways 44 and discharge therefrom at the opposite end of the cooler. More particularly, a header tank 50 is supported at one end of the cooler 10 by the side plates 40 and the header bars 46 to provide a plenum chamber 52 in open communication with the adjacent ends of the longitudinal passageways 44. The coolant, which may be a liquid coolant pumped from the radiator of an engine cooling system of known type, is directed into this header tank 50 through an inlet tube 54 the size and shape of which is such that it is received closely in an opening 56 in the end of the lower, manifold body section 18 when the charge air cooler is mounted within the manifold. If desired, the inlet tube 54 can be sealed in the opening 56 by use of an appropriate gasket (not shown) or other sealer.

The coolant discharged from the longitudinal flow openings 44 is collected within a second plenum chamber 58 constituted by a header tank 60 supported at the other ends of the side plates 40 and the header bars 46 from the tank 50. The collected coolant is then guided away from the cooler 10 for return through an outlet tube 62 to the radiator (not shown) of an engine cooling system. This outlet tube 62 is shaped to fit through an opening 64 in the upper manifold cover section 16, and the outlet tube 62 can be sealed in the opening 64 by the use of an appropriate gasket (not shown).

- 13 -

The component parts of the charge air cooler 10 as described above are all formed from a suitable material, such as copper, aluminium, or the like, having an acceptably high thermal conductivity for efficient transfer of heat between the charge air and the coolant. Moreover, the component parts are all selected from a material compatible with manufacturing techniques for joining them together to form a composite assembly. For example, it is convenient to make the whole of the cooler 10 from copper components and to subject these components to a brazing process to join them together to form a structure which can be mounted as a unit into the air intake manifold 12.

The charge air cooler 10 also includes structural members which cooperate with the mounting bolts 14 to permit the cooler 10 to be retained in the manifold 12. These structural members are advantageously small and compact in size, yet function to support the mechanical forces applied by the bolts 14 so that these forces are substantially prevented from acting on the fin elements 34 or 36, on the divider plates 37, or on the side plates 40. All of these components can thus be structurally lightweight in material and thickness. These structural members are rigid sleeves 66 which extend transversely through the heat exchanger core and are formed from a material compatible for connection to the other components of the core, such as by brazing, during manufacture of

- 14 -

the charge air cooler 10.

Each mounting sleeve 66, as viewed in detail in Figures 2 and 4, extends transversely through a passage defined in the core by an aligned set of openings 68, 69, 70 and 71 formed respectively in the side plates 40, the fin elements 34 of the first set, the divider plates 38, and the fin elements 36 of the second set. Each mounting sleeve 66 is solidly anchored to the side plates 40, such as by brazing. Moreover, each sleeve is anchored to the divider plates 38 by a plurality of annular sealing rings 72 carried about the sleeve at axial positions corresponding with the fin elements 36 of the second set and projecting radially outwardly therefrom between the adjacent pair of divider plates 38. These sealing rings 72 are secured to the sleeve 66 and the divider plates 38 in a leak free manner, such as by brazing, to prevent leakage of the fluids where the mounting sleeve passes through the plates 38. Conveniently, as shown, the openings 71 in the fin elements 36 of the second set are enlarged with respect to the openings 70 in the divider plates 38 to permit a free flow of coolant about the sealing rings 72 as it passes toward the outlet end of the heat exchanger core.

As shown in Figures 1 and 2, the charge air cooler 10 fits into the lower, manifold body section 18 of the manifold 12, and the mounting bolts 14 are passed through the manifold body section 18 and the charge air cooler 10 to secure the cooler in place. For this purpose, the manifold body section 18 is provided with sets of aligned bolt-receiving holes 74 and 76 formed in the opposite walls 78 and 80 thereof at longitudinal positions corresponding to the required position of each mounting sleeve 66. Each of the mounting bolts 14 is received through the associated hole 74 in the wall 78, through the bore 82 of the mounting sleeve 66, and through the aligned hole 76 in the opposite wall 80. In the embodiment shown, in Figures 1 to 4, the holes 76 in the wall 80 are threaded to permit the mounting bolts 14 to be screwed directly to the manifold wall 80. Flat washers 84 and lock washers 86 are provided to prevent the bolts 14 from working loose during use.

The mounting bolts 14 are tightened by turning them within the threaded holes 76 sufficiently to draw the opposite walls 78 and 80 of the lower manifold section 18 into bearing engagement with the charge air cooler 10 and thereby securely mount the charge air cooler 10 in the induction manifold. It is important to note that the mounting sleeves 66 have a length at least as great as the width of the cooler and preferably are slightly longer than this so as to project slightly beyond the opposite exterior surfaces of the heat exchanger core as constituted by the side plates 40. With this construction, the manifold walls 78 and 80 are drawn into bearing engagement with the projecting ends of the mounting sleeves 66 as the bolts 14 are tightened, without coming into bearing engagement with the side plates 40 or other portions of the cooler which may not have sufficient structural strength to withstand the forces exerted thereby. Accordingly, mechanical forces arising by mounting of the charge air cooler 10 into the manifold are applied to the mounting sleeves 66 substantially without any mechanical stress being applied to the heat transfer elements of the heat exchanger core.

The mounting arrangement illustrated in Figures 1 to 4 is particularly advantageous when the manifold wall 80 is disposed adjacent the engine and is thus substantially inaccessible when the manifold 12 is mounted on the engine. The mounting sleeves 66 permit the use of elongated mounting bolts in the form of set screws 14 which pass through the accessible, outboard wall 78 and entirely through the charge air cooler for threaded fastening into the inboard wall 80 without requiring additional bolts or nuts at the inboard side of the manifold. The charge air cooler may therefore be mounted to and/or removed from the manifold 12 both quickly and easily whilst the intake manifold is still in place on the engine.

The use of rather thin divider plates 38 and side plates 40 is permitted since these plates are not required to support mechanical loads due to the mounting assembly. This advantageously minimizes the volume occupied by these plates and correspondingly permits a larger proportion of the charge air cooler volume to be occupied by corrugated or other extended surface heat transfer elements so that improvements in cooler heat transfer capacity can be achieved. This has the advantage that the thin divider plates 38 and side plates 40 tend to expand and contract with temperature changes in a manner more nearly matching the expansion and contraction of the thin heat exchanger fin elements 34 and 36, resulting in an overall reduction of thermal stress in the cooler during temperature fluctuations on start-up or shut down.

Part of a second embodiment is illustrated by way of example in Figure 5, in which those components which are identical to or fulfil the same function as corresponding components in the embodiment of Figures 1 to 4 are designated by the same reference numerals. In this embodiment one or more mounting sleeves 166 are carried by a charge air cooler 10 having a heat exchanger core in the form of a stack of fin elements 34 and 36, divider plates 38, and side plates 40. This charge air cooler is shaped and dimensioned to be received into manifold 12 like that illustrated in Figure 1, in which a lower manifold section 18 has opposite side walls 178 and 180 with bolt-receiving holes 174 and 176 formed respectively therein. However, in this embodiment, the bore 182 of the mounting sleeve 166 is internally threaded for reception of a pair of mounting bolts 114 and 115 into the opposite ends thereof.

- 18 -

More particularly, the bolt 114 is received through the hole 174 in the manifold wall 178 and is screwed directly into the mounting sleeve 166. In a similar manner, the other bolt 115 is received through the hole 176 in the manifold wall 180 and is screwed directly into the opposite end of the mounting sleeve 166. Both bolts 114 and 115 are tightened to draw the manifold walls 178 and 180 into bearing engagement with the opposite ends of the sleeve 166, which again project beyond the side plates 40, whereby securely to anchor the charge air cooler within the manifold.

The charge air cooler of this invention thus can be mounted quickly and easily into an induction manifold, and the heat transfer components of the cooler are substantially isolated from mechanical forces due to its mounting. Moreover, if desired, mounting of the cooler can be accomplished from one side of the manifold by using elongate set screws which pass entirely through the cooler and screw into the opposite side of the manifold.

0079217

- 19 -

Claims:

1. A charge air cooler for mounting within an engine induction manifold (12), comprising a heat exchanger core (10) having a plurality of heat transfer elements (34,36), defining a first flow path and a second flow path for passage of charge air and a coolant in heat transfer relation with one another, characterised in that at least one substantially rigid mounting sleeve (66) is carried by the said heat exchanger core (10) and extends therethrough, the length of the mounting sleeve (66) being at least as great as that dimension of the said heat exchanger core (10) parallel to the length of the sleeve (66).

2. A charge air cooler as claimed in Claim 1, characterised in that the mounting sleeve (66) projects slightly from the surfaces of the heat exchanger core (10) at the opposite ends of the said sleeve (66).

3. A charge air cooler as claimed in Claim 1 or Claim 2, characterised in that there are a plurality of mounting sleeves (66) carried by the heat exchanegr core (10) each extending generally transversely of the length of the core (10) and generally parallel to each other.

4. A charge air cooler as claimed in any of Claims 1 to 3, characterised in that there are provided means (72) connected between the heat transfer elements (34,36,38) of the heat exchanger and the or each mounting sleeve (66) for preventing leakage between the said first and second flow paths where the said mounting sleeve (66) passes through the heat transfer elements (34,36,38).

5. A charge air cooler as cla ed in Claim 4, characterised in that the heat transfer elements (34, 36,38) comprise a stack of first fin elements (34) and second fin elements (36) alternately, a plurality of divider plates (38) being disposed each between an adjacent pair of first and second fin elements (34,36); the first and second fin elements (34,36) and the divider plates (38) having aligned openings (69,70,71) formed therein for reception of the mounting sleeve (66) and the leakage preventing means (72) being coupled between the mounting sleeve (66) and each of the said divider plates (38).

6. A charge air cooler as claimed in Claim 5 or Claim 6, in which the leakage preventing means (72) comprise a plurality of annular sealing rings carried on the mounting sleeve (66) and secured thereto at positions spaced axially of the sleeve (66) and within openings (70) in the said second fin elements (36), the sealing rings (72) each projecting radially outwardly from the mounting sleeve (66) between respective pairs of divider plates (38) and being secured thereto.

7. An assembly comprising a charge air cooler (10) according to any of Claims 1 to 8 and an engine induction manifold (12) having an elongate chamber (20) defined in part by a pair of side walls (78,80) bounding opposite sides of the chamber, in which there are securing means (14) extending through at least one (78) of the side walls of the manifold (12) and into the mounting sleeve (66) for securing the mounting sleeve with respect to the said one side (78) wall whereby to secure the charge air cooler (10) within the manifold (12).

8. An assembly according to any claim, characterised in that the said securing means (14) comprise means extending through the said side walls (74,80) and into the mounting sleeve (66;166) for securing the heat exchanger core (10) within the manifold (12) and for bringing the said side walls (74,80) into bearing engagement with the opposite ends of the mounting sleeve (66;166).

9. An assembly according to Claim 7 or Claim 8, characterised in that the said side walls (78,80) of the manifold (12) have aligned openings (74,76) formed therein, and in that the securing means comprise a bolt (14) extending through the opening (74) in one of the manifold side walls (78), through the mounting sleeve (66), and at least into the opening (76) in the other of the manifold side walls (80).

10. An assembly according to Claim 9, characterised in that the opening (76) in the said other manifold side wall (80) is threaded and the said bolt (14) is screwed into it.

11. An assembly according to Claim 7 or Claim 8, characterised in that the said mounting sleeve (166) is internally threaded, and the said securing means comprise a pair of bolts (114,115) extending through the manifold side walls (74,80) and fastened respectively into opposite ends of the sleeve (166).

12. An assembly according to any of Claims 7 to 10, characterised in that there are a plurality of mounting sleeves (66;166) carried by the charge air cooler (10), and the securing means (14;114,115) comprise a plurality of bolts for securing the mounting sleeves (66;166) with respect to the manifold side walls (74,80) whereby the secure the charge air cooler (10) in the manifold (12).

Fig. I.

1/2

Fig. 2.

Fig. 5.

Fig. 4.

Fig. 3.